(19) Europäisches Patentamt
European Patent Office
Office européen des brevets

(11) EP 4 113 024 A1

(12) EUROPÄISCHE PATENTANMELDUNG

(43) Veröffentlichungstag:
04.01.2023  Patentblatt 2023/01

(21) Anmeldenummer: 22171891.9

(22) Anmeldetag: 05.05.2022

(51) Internationale Patentklassifikation (IPC):
F24F 7/013 (2006.01)  F24F 13/06 (2006.01)
F24F 13/08 (2006.01)

(52) Gemeinsame Patentklassifikation (CPC):
F24F 7/013; F24F 13/06; F24F 13/08;
F24F 2013/088

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
KH MA MD TN

(30) Priorität: 29.06.2021  DE 102021116749

(71) Anmelder: Stiebel Eltron GmbH & Co. KG
37603 Holzminden (DE)

(72) Erfinder:
• Nies, Thilo
37627 Stadtoldendorf (DE)
• Stahlschmidt, Ronald
58511 Lüdenscheid (DE)
• Erner, Thomas
37671 Höxter (DE)

(54) **DEZENTRALES LÜFTUNGSGERÄT UND STRÖMUNGSGLEICHRICHTER**

(57)    Die Erfindung betrifft ein dezentrales Lüftungsgerät (100) mit mindestens einem Lüfter (210), mindestens einem Wärmespeicherpaket (300; 310-340) und mindestens einem Strömungsgleichrichter (220) zwischen dem Lüfter (210) und dem mindestens einen Wärmespeicherpaket (300). Der Strömungsrichter (220) weist einen inneren Ring (221) und/oder einen äußeren Abschnitt (222) sowie mindestens eine Gruppe aus mindestens einer ersten und einer zweiten Leitschaufel (223, 224, 225) jeweils an dem inneren Ring (221) und/oder dem äußeren Abschnitt (222) auf. Die mindestens ersten und zweiten Leitschaufeln (223, 224, 225) sind bogenförmig an dem inneren Ring (221) und/oder dem äußeren Abschnitt (222) vorgesehen. Die Erfindung betrifft außerdem einen Strömungsgleichrichter (220) für ein Lüftungsgerät (100).

Fig. 3A

Processed by Luminess, 75001 PARIS (FR)

EP 4 113 024 A1

**Beschreibung**

Die vorliegende Erfindung betrifft ein dezentrales Lüftungsgerät sowie einen Strömungsgleichrichter.

Dezentrale Lüftungsgeräte werden typischerweise zur Belüftung von einzelnen Räumen oder Wohnungseinheiten verwendet. Es werden in der Regel mehrere Geräte pro Wohneinheit installiert. Hierzu wird jeweils eine Öffnung oder Bohrung in einer Außenwand vorgesehen und das Lüftungsgerät wird zumindest teilweise in der Bohrung untergebracht. Ein derartiges Lüftungsgerät weist typischerweise mindestens einen Lüfter sowie mindestens ein Wärmespeicherpaket auf. In einer ersten Betriebsart kann Luft von innen nach außen geblasen werden. Die warme Innenluft erwärmt dabei die Wärmespeicherpakete. In einer zweiten Betriebsart wird die Strömungsrichtung umgekehrt und kalte, frische Luft wird von außen in den Raum geblasen. Hierbei streift die kalte Außenluft an den vorgewärmten Wärmespeicherpaketen vorbei und erwärmt sich dabei. Somit kann eine Wärmerückgewinnung bei einem Lüftungsgerät erreicht werden. Das Prinzip funktioniert ebenfalls bei umgekehrten Temperaturgradienten.

Es ist eine Aufgabe der vorliegenden Erfindung, die Effizienz derartiger dezentraler Lüftungsgeräte zu erhöhen und damit die Wärmerückgewinnung zu erhöhen.

Diese Aufgabe wird durch ein dezentrales Lüftungsgerät nach Anspruch 1 sowie durch einen Strömungsgleichrichter nach Anspruch 10 gelöst.

Somit wird ein dezentrales Lüftungsgerät mit mindestens einem Lüfter, mindestens einem Wärmespeicherpaket und mindestens einem Strömungsgleichrichter zwischen dem Lüfter und dem Wärmespeicherpaket vorgesehen. Der Strömungsgleichrichter weist einen inneren Ring und/oder einen äußeren Abschnitt sowie mindestens eine Gruppe aus mindestens ersten und zweiten Leitschaufeln zwischen dem inneren Ring und dem äußeren Abschnitt auf. Die mindestens ersten und zweiten Leitschaufeln sind bogenförmig an dem inneren Ring und/oder dem äußeren Abschnitt vorgesehen.

Vorteilhafterweise können die Leitschaufeln zwischen dem inneren Ring und dem äußeren Abschnitt vorgesehen sein.

Die Leitschaufeln weisen vorteilhaft jeweils einen unterschiedlichen Anstellwinkel bezogen auf eine durch den inneren Ring aufgespannte Ebene auf.

Gemäß einem Aspekt der vorliegenden Erfindung weist jede Gruppe erste, zweite und dritte Leitschaufeln auf.

Gemäß einem weiteren Aspekt der vorliegenden Erfindung ist das Verhältnis zwischen der Breite des äußeren Abschnitts zum Radius des inneren Rings zwischen 1,2 und 10.

Gemäß einem Aspekt der vorliegenden Erfindung ist der Anstellwinkel der Leitschaufeln zwischen 40° und 90°.

Gemäß einem weiteren Aspekt der vorliegenden Erfindung ist der Strömungsgleichrichter einstückig in einem Spritzgussverfahren, einem Metallgussverfahren oder Metallspritzgussverfahren hergestellt. Das Material des Strömungsgleichrichters erlaubt optional eine zumindest temporäre Wärmespeicherung.

Gemäß einem weiteren Aspekt der vorliegenden Erfindung weist der Strömungsgleichrichter vier Gruppen von ersten, zweiten und dritten Leitschaufeln auf.

Gemäß einem weiteren Aspekt der vorliegenden Erfindung ist der äußere Abschnitt (vier)eckig ausgestaltet. Hierbei können die Ecken abgerundet sein.

Gemäß einem Aspekt der vorliegenden Erfindung ist ein Lüftungsgerät mit einem Lüfter, mindestens einem Wärmespeicherpaket und mindestens einem Strömungsgleichrichter zwischen dem Lüfter und dem mindestens einen Wärmespeicherpaket vorgesehen. Der Strömungsgleichrichter weist einen Ring sowie mindestens eine erste und zweite Leitschaufel an dem Ring auf. Alternativ dazu kann der Strömungsgleichrichter keinen inneren Ring, sondern lediglich einen äußeren Abschnitt aufweisen, wobei die mindestens eine erste und zweite Leitschaufel an dem äußeren Abschnitt vorgesehen sind bzw. mit diesem befestigt sind.

Gemäß einem weiteren Aspekt der vorliegenden Erfindung ist ein Lüftungsgerät vorgesehen, welches mindestens einen Lüfter, mindestens ein Wärmespeicherpaket und einen Strömungsgleichrichter aufweist. Der Strömungsgleichrichter weist mindestens einen Ring auf, an welchem mindestens eine erste und zweite Leitschaufel vorgesehen sind. Die Leitschaufeln können sich dabei innerhalb der durch den Ring aufgespannten Fläche nach innen erstrecken. Die Leitschaufeln können sich auch nach außen, d. h. außerhalb der durch den Ring aufgespannten Fläche, erstrecken.

Gemäß einem Aspekt der vorliegenden Erfindung sind zwei Ringe vorhanden, an welchen die Leitschaufeln befestigt sind.

Die Erfindung betrifft ebenfalls einen Strömungsgleichrichter für Lüftungsgeräte. Der Strömungsgleichrichter weist einen inneren Ring und/oder einen äußeren Abschnitt (beispielsweise viereckig) sowie mindestens eine Gruppe bestehend aus mindestens ersten und zweiten Leitschaufeln an dem inneren Ring und/oder dem äußeren Abschnitt auf. Die mindestens ersten und zweiten Leitschaufeln sind bogenförmig an dem inneren Ring und/oder dem äußeren Abschnitt ausgestaltet.

Gemäß einem Aspekt der Erfindung sind die Leitschaufeln bogenförmig, insbesondere kreisbogenförmig, spiralbogenförmig, ellipsenbogenförmig, e-funktionsbogenförmig oder polynombogenförmig.

Gemäß einem Aspekt der Erfindung ist der innere Ring eckig, rechteckförmig, rund und/oder mit abgerundeten Ecken ausgestaltet.

Gemäß der Erfindung wird ein dezentrales Lüftungsgerät mit mindestens einem Lüfter und mindestens einem Wärmespeichergerät innerhalb des Gehäuses des Lüfters vorgesehen. Ferner ist ein Strömungsgleichrichter vor und/oder hinter dem Lüfter vorgesehen. Die Strömungsgleichrichter befinden sich somit zwischen dem Lüfter und den Wärmespeicherpaketen. Der Strömungsgleichrichter dient insbesondere dazu, einen Übergang einer kreisförmigen Strömung in eine Rechteck- oder quadratische Strömung zu ermöglichen.

Das dezentrale Lüftungsgerät kann beispielsweise im Pendelbetrieb betrieben werden, d. h. einer der Lüfter wird in einer ersten Richtung beispielsweise für 40 bis 80 Sekunden betrieben. Anschließend wird die Drehrichtung des Lüfters für 40 bis 80 Sekunden umgedreht. Alternativ dazu können auch zwei Lüfter vorgesehen werden, welche jeweils eine Vorzugsrichtung aufweisen, wobei die jeweiligen Vorzugsrichtungen entgegengesetzt sind. Mit dem erfindungsgemäßen Strömungsgleichrichter kann die von dem Lüfter erzeugte Luftströmung mit einem kreisförmigen Querschnitt übergeleitet werden auf einen viereckigen z.B. rechteckigen oder quadratischen Querschnitt der Wärmespeicherpakete.

Gemäß einem Aspekt der vorliegenden Erfindung ermöglicht der Strömungsgleichrichter eine Luftströmung in zwei Richtungen. Optional bewirkt der Strömungsgleichrichter keinen nennenswerten Druckverlust. Insbesondere ist eine Balance zwischen einem Volumenstrom in einer ersten Richtung (von außen nach innen) und einem Volumenstrom in einer entgegengesetzten Richtung (von innen nach außen) vorhanden.

Gemäß einem Aspekt der vorliegenden Erfindung ist die Tiefe eines Strömungsgleichrichters zwischen 10 und 20 mm und insbesondere 12 mm.

Der Strömungsgleichrichter weist ein inneres und äußeres Ende auf, wobei das innere Ende als Ring oder Kreis ausgestaltet ist und das äußere Ende viereckig z.B. rechteckig oder quadratisch ausgestaltet sein kann. Zwischen dem inneren und äußeren Ende erstreckt sich eine Mehrzahl von Leitschaufeln. Die Leitschaufeln dienen dazu, die Luftströmung vom Lüfter so umzulenken, dass die Luftströmung auch die Ecken der Wärmespeicherpakete erreicht.

Gemäß einem Aspekt der vorliegenden Erfindung ist mindestens ein Paar oder Gruppe aus ersten und zweiten Leitschaufeln zwischen dem inneren und äußeren Ende vorhanden. Hierbei ist jeweils eine Mehrzahl von ersten Leitschaufeln und eine Mehrzahl von zweiten Leitschaufeln vorhanden. Damit sind jeweils N erste und zweite Leitschaufeln vorhanden.

Gemäß einem Aspekt der vorliegenden Erfindung ist mindestens eine Gruppe aus ersten, zweiten und dritten Leitschaufeln zwischen dem inneren und äußeren Ende vorhanden. Hierbei ist jeweils eine Mehrzahl von ersten Leitschaufeln, eine Mehrzahl von zweiten Leitschaufeln und eine Mehrzahl von dritten Leitschaufeln vorhanden. Damit sind jeweils N erste, zweite und dritte Leitschaufeln vorhanden.

Gemäß einem besonders bevorzugten Ausführungsbeispiel entspricht N hierbei 4, d. h. es sind 4 Gruppen von ersten, zweiten und dritten Leitschaufeln vorhanden. Die ersten, zweiten und dritten Leitschaufeln sind in Umfangsrichtung benachbart zueinander vorgesehen. Die Leitschaufeln sind insbesondere gekrümmt ausgestaltet.

Gemäß einem Aspekt der vorliegenden Erfindung weisen die Leitschaufeln eine Länge und eine Tiefe auf. Die Länge entspricht dabei einem Kreisbogen beispielsweise mit einem Radius zwischen 20 und 100 mm. Die Leitschaufeln können einen Anstellwinkel $\alpha$ zwischen 40 und 90° aufweisen.

Gemäß einem Aspekt der vorliegenden Erfindung kann das Verhältnis zwischen der äußeren Abmessung des Strömungsgleichrichters und den Abmessungen des inneren Kreises zwischen 1,2 und 10 betragen.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.

Fig. 1          zeigt eine schematische Darstellung eines Lüftungsgerätes gemäß einem ersten Ausführungsbeispiel,

Fig. 2          zeigt eine Explosionszeichnung des Lüftungsgerätes von Fig. 1,

Fig. 3A          zeigen jeweils verschiedene Ansichten eines Strömungsgleichrichters

bis 3E          gemäß einem zweiten Ausführungsbeispiel,

Fig. 4A          zeigen verschiedene Ansichten einer Kombination aus Lüfter und

und 4B          Strömungsgleichrichter gemäß der Erfindung,

Fig. 5          zeigt eine schematische Darstellung eines Teils des Strömungsgleichrichters gemäß der Erfindung,

Fig. 6          zeigt eine schematische Darstellung eines Strömungsgleichrichters gemäß einem Aspekt der Erfindung,

Fig. 7A und 7B          zeigen jeweils eine schematische Darstellung eines Strömungsgleichrichters gemäß einem Aspekt der vorliegenden Erfindung, und

Fig. 8          zeigt eine schematische Darstellung eines Strömungsgenerators gemäß einem Aspekt der vorliegenden Erfindung.

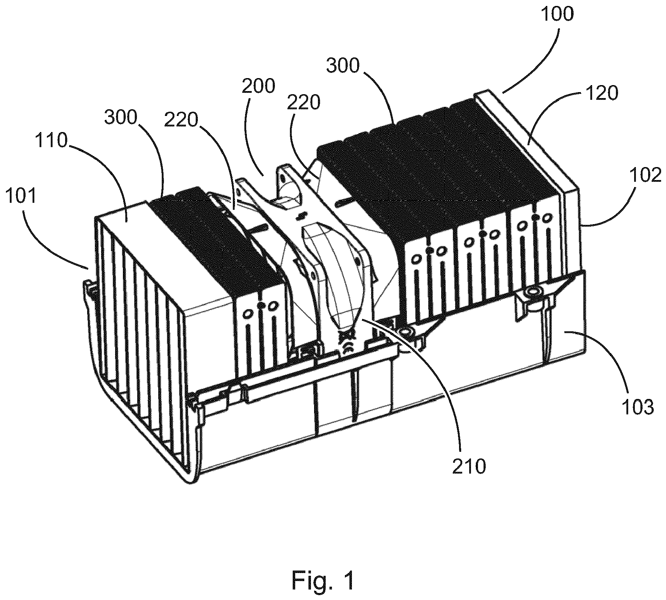

Fig. 1 zeigt eine schematische Darstellung eines Lüftungsgerätes gemäß einem ersten Ausführungsbeispiel. Das dezentrale Lüftungsgerät 100 weist ein erstes und zweites Ende 101, 102 sowie ein Gehäuse 103 (in Fig. 1 nur teilweise dargestellt) auf. Am ersten Ende kann ein Filter, Gitter und/oder Gitterelement 110 vorgesehen sein. Zwischen dem ersten und zweiten Ende 101, 102 des Lüftungsgerätes 100 ist eine Einheit 200 aus einem Lüfter 210 mit Strömungsgleichrichtern 220 sowie eine Mehrzahl von Wärmespeicherpaketen 300 vorgesehen. Vorzugsweise ist zwischen dem Lüfter 210 und dem ersten und zweiten Ende 101, 102 des Lüftungsgerätes 100 jeweils mindestens ein Wärmespeicherpaket 300 vorgesehen.

Optional ist der Querschnitt des Lüftungsgerätes 100 viereckig, z. B. im Wesentlichen quadratisch oder rechteckig. Alternativ dazu kann der Querschnitt auch vieleckig sein. Dementsprechend ist der Querschnitt der Wärmespeicherpakete 300 ebenfalls viereckig (quadratisch oder rechteckig). Der Querschnitt der Lüfter, insbesondere der durch die Lüfterschaufeln überstrichene Bereich, ist hingegen kreisförmig oder rund.

Der Strömungsgleichrichter 220 dient hierbei dazu, die von dem Lüfter 210 erzeugte Luftströmung zu den Wärmespeicherpaketen 300 mit viereckigem (z. B. quadratischem oder rechteckigem) Querschnitt umzulenken oder zu leiten, so dass eine verbesserte Durchströmung der Wärmespeicherpakete 300 insbesondere auch im Bereich der Ecken erfolgen kann. Damit kann die Effizienz der Wärmerückgewinnung gesteigert werden.

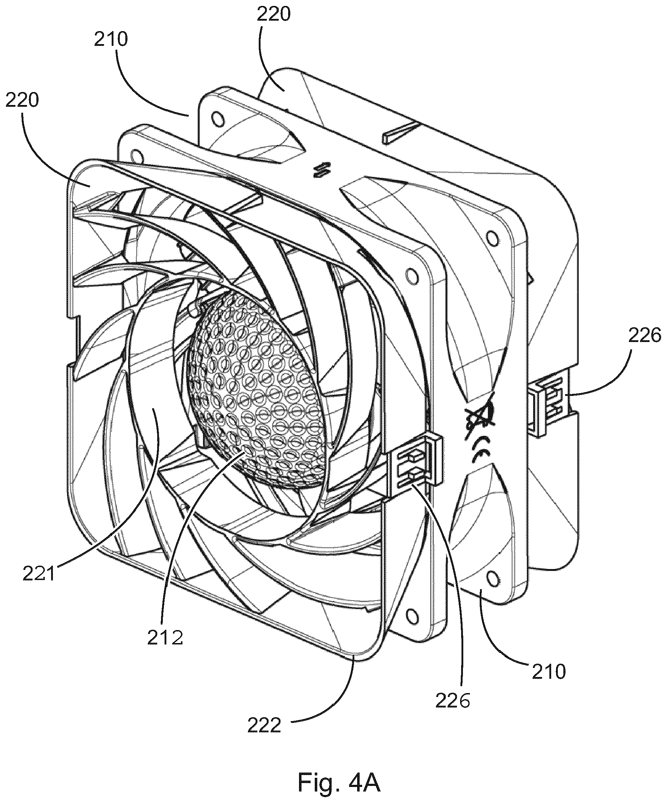

Im Ausführungsbeispiel ist als Strömungsgenerator eine kompakte Einheit 200 aus einem Lüfter 210 und zwei Strömungsgleichrichtern 220 gebildet. Die dem Lüfter 210 zugeordneten zwei Strömungsgleichrichter 220, sind jeweils auf verschiedenen Seiten des Lüfters 210 vorgesehen. Damit wird in den Lüfter 210 einströmende Luft auf die Lüfterschaufeln 211 optimal verteilt und aus dem Lüfter 210 ausströmende Luft auf ein folgendes Wärmespeicherpaket (300, 310, 320) optimal verteilt, wie auch in Figur 4A gezeigt. Eine Lüftermotorabdeckung 212 kann dabei in einen Strömungsgleichrichter hineinragen.

Ein außenseitiges Gitter oder Filterelement 120 ist vorteilhaft vorgesehen.

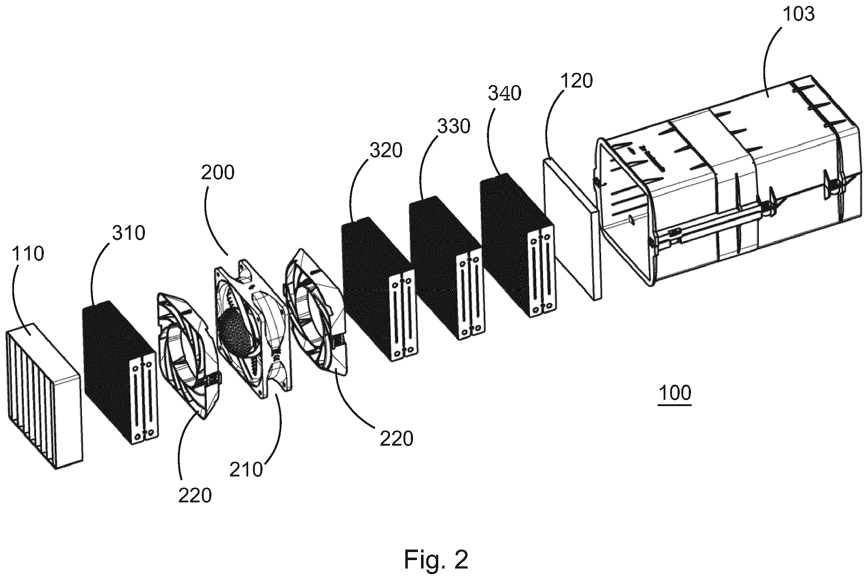

Fig. 2 zeigt eine Explosionszeichnung des Lüftungsgerätes von Fig. 1. In Fig. 2 sind die jeweiligen Elemente des Lüftungsgerätes 100 detailliert dargestellt. Das Lüftungsgerät weist somit ein Gehäuse 103, ein Schutzgitter 110, eine Mehrzahl von Wärmespeicherpaketen 310, 340, mindestens einen Lüfter 210 und mindestens einen Strömungsgleichrichter 220 auf. In Fig. 2 sind hierbei zwei Strömungsgleichrichter 220 vor und hinter dem Lüfter 210 vorgesehen.

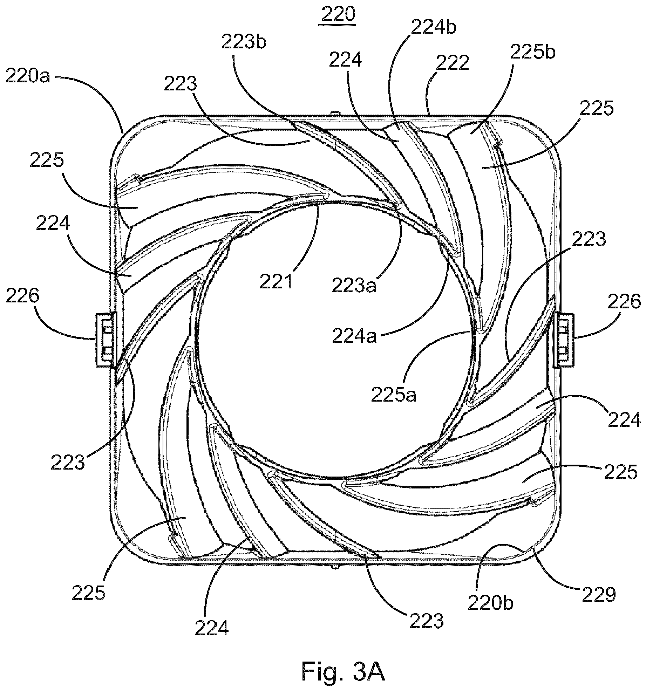

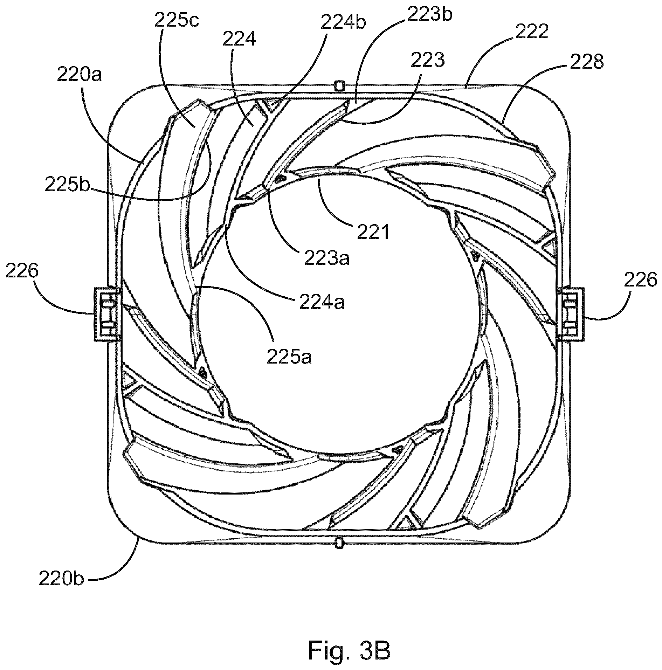

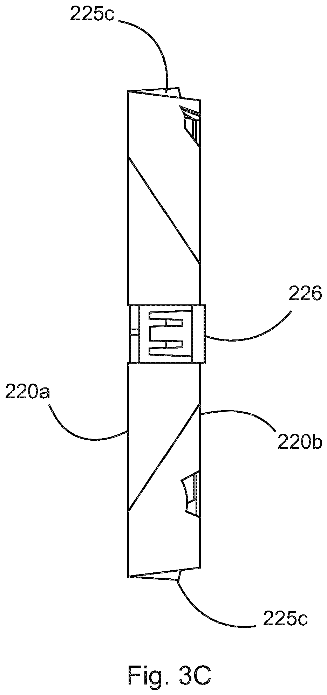

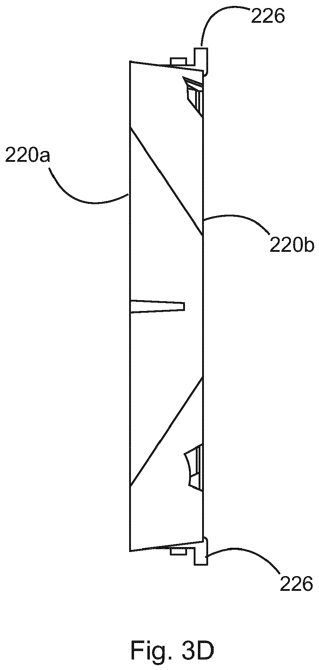

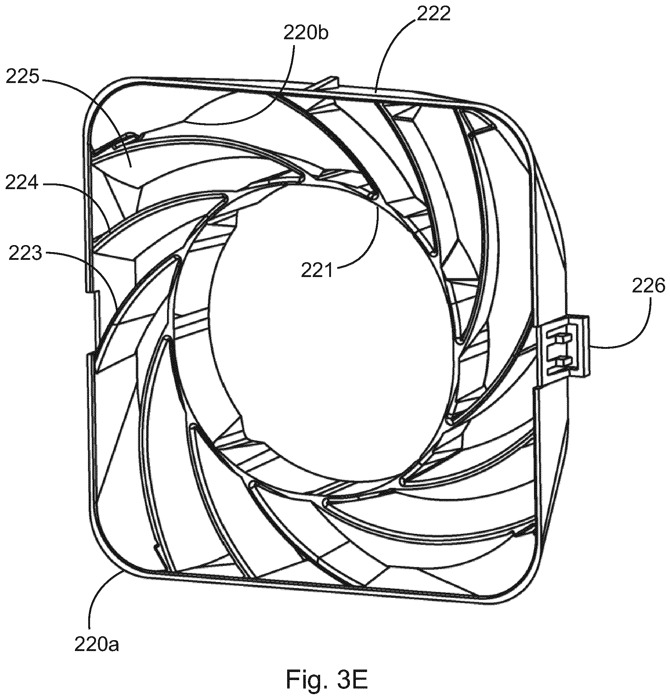

Fig. 3A bis 3E zeigen jeweils verschiedene Ansichten eines Strömungsgleichrichters 220 gemäß einem zweiten Ausführungsbeispiel. Fig. 3A zeigt eine schematische Draufsicht auf ein erstes Ende des Strömungsgleichrichters. Fig. 3B zeigt eine schematische Ansicht eines zweiten Endes, Fig. 3C und 3D zeigen jeweils eine Seitenansicht des Strömungsgleichrichters und Fig. 3E zeigt eine perspektivische Ansicht des Strömungsgleichrichters. Der Strömungsgleichrichter 220 weist einen inneren Ring 221 und einen äußeren, viereckigen (rechteckig oder quadratisch) Abschnitt 222 auf. Zwischen dem inneren Ring 221 und dem äußeren Abschnitt 222 ist eine Mehrzahl von Leitschaufeln 223, 224, 225 vorgesehen. Diese Leitschaufeln weisen insbesondere eine Gruppe von z.B. ersten, zweiten und dritten Leitschaufeln 223, 224, 225 auf. Die Anzahl der Leitschaufeln in einer Gruppe ist mindestens zwei. Die Leitschaufeln in einer Gruppe sind jeweils unterschiedlich. Die erste Leitschaufel 223 weist ein erstes Ende 223a am inneren Ring 221 und ein zweites Ende 223b am äußeren Abschnitt 222 auf. Die zweite Leitschaufel 224 weist ein erstes Ende 224a am inneren Ring 221 und ein zweites Ende 224b am äußeren Abschnitt 222 auf. Die dritte Leitschaufel 225 weist ein erstes Ende 225a am inneren Ring 221 und ein zweites Ende 225b am äußeren Abschnitt 222 auf.

Vorzugsweise wird der Strömungsgleichrichter 220 einstückig beispielsweise im Spritzgussverfahren oder im Metallgussverfahren hergestellt. Das Material kann optional zur temporären Wärmespeicherung geeignet sein.

In den Figuren 3A bis 3E sind vier Gruppen von der ersten, zweiten und dritten Leitschaufel 223, 224, 225 dargestellt. Alternativ dazu kann die Anzahl der ersten, zweiten und dritten Leitschaufeln 223, 224, 225 auch größer oder kleiner sein. Gemäß der Erfindung sind somit mehrere Gruppen von Leitschaufeln (erste, zweite und dritte Leitschaufeln) zwischen dem inneren Ring 221 und dem äußeren Abschnitt 222 vorgesehen. Die Anzahl der Gruppen lässt sich erhöhen oder reduzieren.

Der Strömungsgleichrichter 220 kann optional zwei Befestigungseinheiten 226 aufweisen, mittels welchen der Strömungsgleichrichter 220 beispielsweise an einem Lüfter 210 befestigt werden kann.

Da die Gruppen der Leitschaufeln einen Übergang zwischen dem kreisförmigen inneren Ring 121 und dem rechteckigen oder quadratischen äußeren Abschnitt 222 bewirken müssen, ist die Länge der ersten, zweiten und dritten Leitschaufeln unterschiedlich. Die ersten, zweiten und dritten Leitschaufeln 223, 224, 225 sind jeweils gebogen ausgestaltet und können dabei einen Kreisbogen mit einem Radius zwischen 20 und 100 mm darstellen. Das Verhältnis zwischen der Höhe/Breite des äußeren Abschnitts 222 zu dem Innendurchmesser des inneren Ringes 121 liegt zwischen 1,2 und 10.

Die Leitschaufeln können gemäß einem Aspekt der vorliegenden Erfindung eine Form aufweisen, welche einer logarithmischen Spirale entspricht:

$$r = k * \exp(a * t) - k$$

r entspricht hierbei dem Radius, $\Phi$ dem Umfangswinkel und a und k sind Konstanten. Die Konstante k sollte optional zwischen 20 und 400 liegen und die Konstante a sollte zwischen 0,3 und 3 liegen.

Die Leitschaufeln können einen Anstellwinkel α zwischen 40 und 90° aufweisen.

Der Anstellwinkel der drei Leitschaufeln sowie die Wölbung der drei Leitschaufeln können mit steigendem Radius variieren.

Gemäß einem Aspekt der vorliegenden Erfindung ist der Querschnitt des Strömungsgleichrichters viereckig ausgestaltet, wobei die Ecken abgerundet sein können. Der Radius der abgerundeten Kanten (220a, 220b) kann maximal die Hälfte der Seitenkanten des Vierecks betragen. Gemäß einem weiteren Aspekt der vorliegenden Erfindung kann die Außengeometrie des Strömungsgleichrichters in axiale Richtung derart verändert werden, dass der Radius der Verrundung in axialer Richtung bis auf 0 mm abnimmt.

Gemäß einem Aspekt der vorliegenden Erfindung weist der Strömungsgleichrichter ein Material auf, welches ebenfalls eine Wärmespeicherung ermöglicht.

Gemäß einem Aspekt der vorliegenden Erfindung kann der Winkel α der ersten Leitschaufeln 123 90° betragen.

Der Anstellwinkel α der zweiten und dritten Schaufel ist hierbei zwischen 45 und 90°, so dass diese Leitschaufeln 24, 25 ein Umlenken des anströmenden Luftstromes insbesondere in Richtung der Ecken bewirken.

Die dritte Leitschaufel 225 weist an ihrem zweiten Ende 225b eine größere Tiefe auf als an dem ersten Ende 225a. Der Strömungsgleichrichter kann einen kreisförmigen Führungsabschnitt 228 aufweisen.

Ein drittes Ende 225C ist auch in Figur 3C zu sehen.

Die Befestigungseinheiten 226 dienen dazu, den Strömungsgleichrichter in oder an einem Gehäuse eines Lüfters 210 zu befestigen.

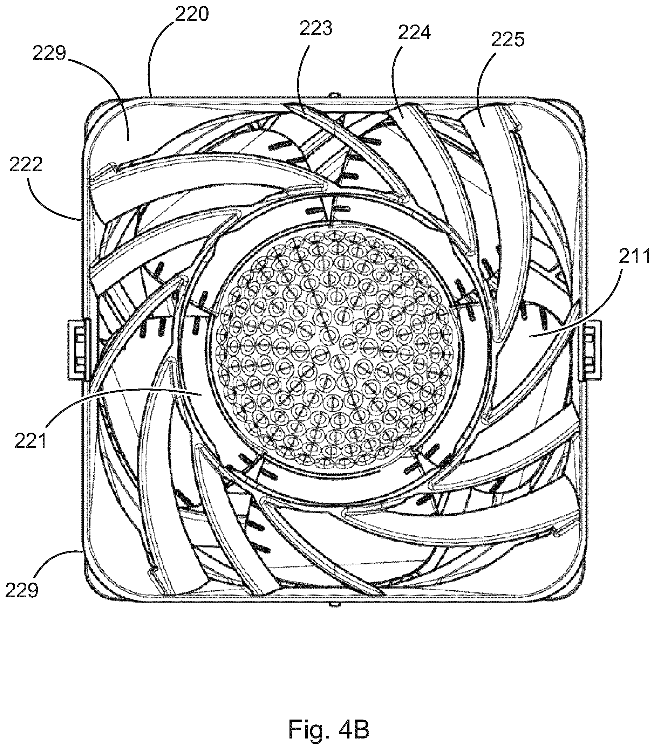

Fig. 4A und 4B zeigen verschiedene Ansichten einer Kombination aus Lüfter 210 und Strömungsgleichrichter 220 gemäß der Erfindung. In Fig. 4A ist eine perspektivische Ansicht einer Kombination aus einem Lüfter und zwei Strömungsgleichrichtern gezeigt.

Eine Lüftermotorabdeckung 212, insbesondere mit einer golfballartigen Oberfläche, mit kleineren Einbuchtungen ist vorteilhaft verwendet.

In Fig. 4B ist eine Draufsicht auf die Kombination von Fig. 4A dargestellt.

Die Strömungsgleichrichter 220, gemäß Fig. 4A, entsprechen den Strömungsgleichrichtern 220 gemäß Fig. 3A bis 3E. Wie aus den Fig. 4A und 4B hervorgeht, weist der Lüfter 210 mehrere Lüfterschaufeln 211 auf. Bei der Rotation der Lüfterschaufeln 211 wird eine Luftströmung erzeugt, welche zunächst kreisförmig ausgestaltet ist. Mit den Leitschaufeln 223, 224, 225 wird dieser Luftstrom so umgelenkt, dass die Luftströmung auch die Ecken gleichmäßiger erreicht.

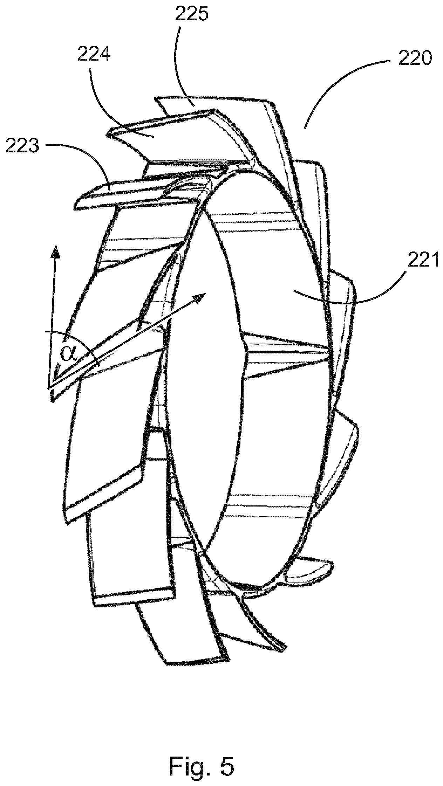

Fig. 5 zeigt eine schematische Darstellung eines Teils des Strömungsgleichrichters gemäß der Erfindung. In Fig. 5 ist der äußere Abschnitt nicht dargestellt, so dass der Anstellwinkel der Leitschaufeln 223, 224, 225 besser sichtbar ist.

In Fig. 5 ist der Anstellwinkel α dargestellt. Dieser Winkel α gibt den Winkel der Leitschaufeln bezogen auf eine durch den Ring aufgespannte Ebene an. Optional kann der Wert des Winkels α bei verschiedenen Leitschaufeln unterschiedliche Werte aufweisen.

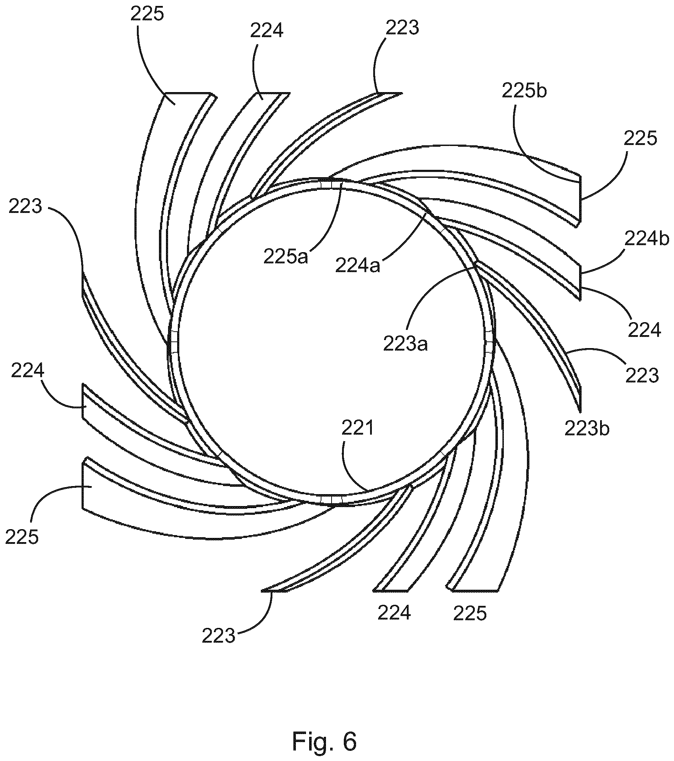

Fig. 6 zeigt eine schematische Darstellung eines Strömungsgleichrichters gemäß einem Aspekt der vorliegenden Erfindung. Der Strömungsgleichrichter 220 weist einen Ring 221 auf, welcher optional kreisförmig ausgestaltet ist. Ferner weist der Strömungsgleichrichter 220 erste, zweite und dritte Leitschaufeln 223, 224, 225 auf. Insbesondere weist der Strömungsgleichrichter mehrere Gruppen von der ersten, zweiten und dritten Leitschaufel 223, 224, 225 auf. In dem Ausführungsbeispiel von Fig. 6 sind vier Gruppen dargestellt. Die erste Leitschaufel weist ein erstes und zweites Ende 223a, 223b auf. Die zweite Leitschaufel 224 weist ein erstes und zweites Ende 224a, 224b auf. Die dritte Leitschaufel 225 weist ein erstes und zweites Ende 225a, 225b auf. Gemäß dem Ausführungsbeispiel von Fig. 6 sind lediglich die ersten Enden 223a, 224a, 225a der ersten, zweiten und dritten Leitschaufel 223, 224, 225 mit dem Ring 221 verbunden.

Somit fehlt im Gegensatz zu den obigen Ausführungsbeispielen der äußere Abschnitt 222. Das Ausführungsbeispiel von Fig. 6 stellt somit eine alternative Ausgestaltungsmöglichkeit des erfindungsgemäßen Strömungsgleichrichters dar. Die zweiten Enden 223b, 224b, 225b der ersten, zweiten und dritten Leitschaufeln 223, 224, 225 sind somit frei und beweglich.

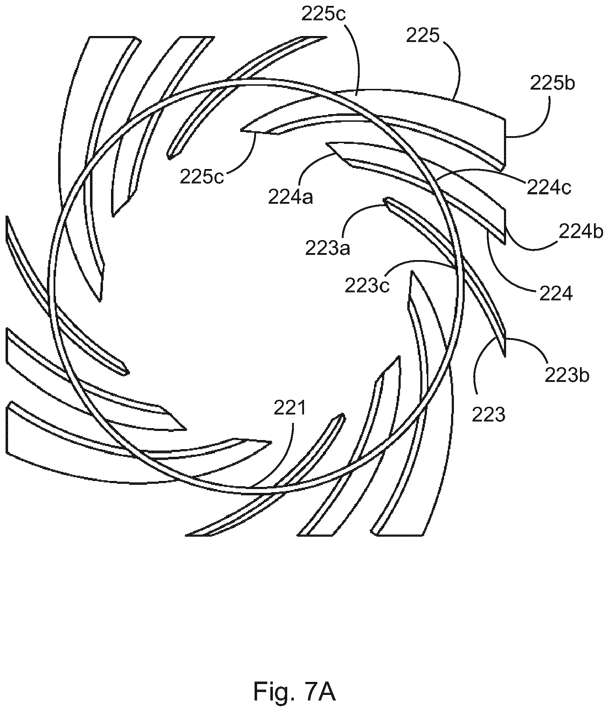

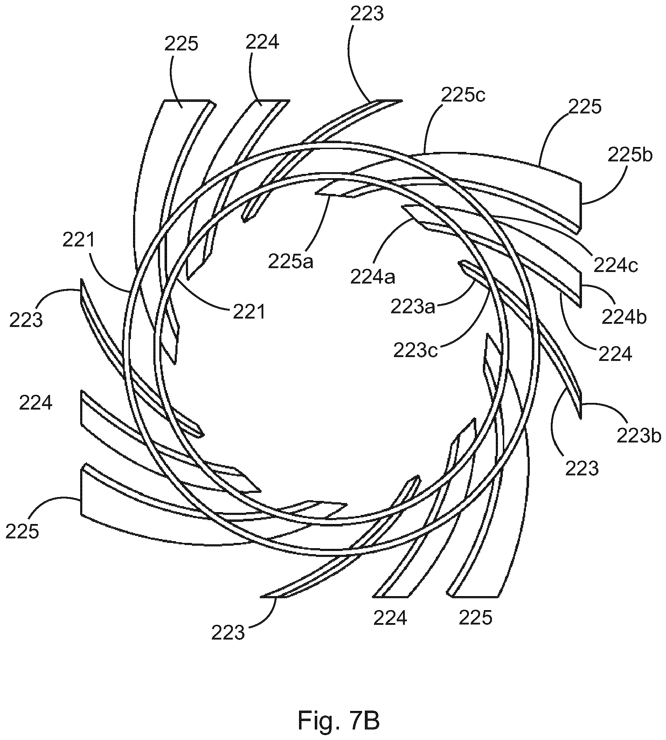

Fig. 7A und 7B zeigen jeweils eine schematische Ansicht eines Strömungsgleichrichters gemäß der Erfindung. In Fig. 7A ist ein Strömungsgleichrichter mit einem Ring 221 und in Fig. 7B ist ein Strömungsgleichrichter mit zwei Ringen 221 gezeigt. Der Strömungsgleichrichter weist ferner erste, zweite und dritten Leitschaufeln 223, 224, 225 auf. Insbesondere weist der Strömungsgleichrichter 220 mehrere Gruppen von ersten, zweiten und dritten Leitschaufeln 223, 224, 225 auf. Die Leitschaufeln weisen ein erstes Ende 223a, 224a, 225a, einen mittleren Abschnitt 223c, 224c, 225c und ein zweites Ende 223b, 224b, 225b auf. Die Leitschaufeln 223, 224, 225 sind mit ihrem mittleren Abschnitt 223c, 224c, 225c mit dem ersten und/oder zweiten Ring 221 verbunden. Somit sind die ersten und zweiten Enden 223a, 224a, 225a; 223b, 224b, 225b nicht mit dem mindestens einen Ring 221 verbunden, sondern sind frei und beweglich.

Das Ausführungsbeispiel von Fig. 7A und 7B stellt somit eine alternative Ausgestaltung des Strömungsgleichrichters dar.

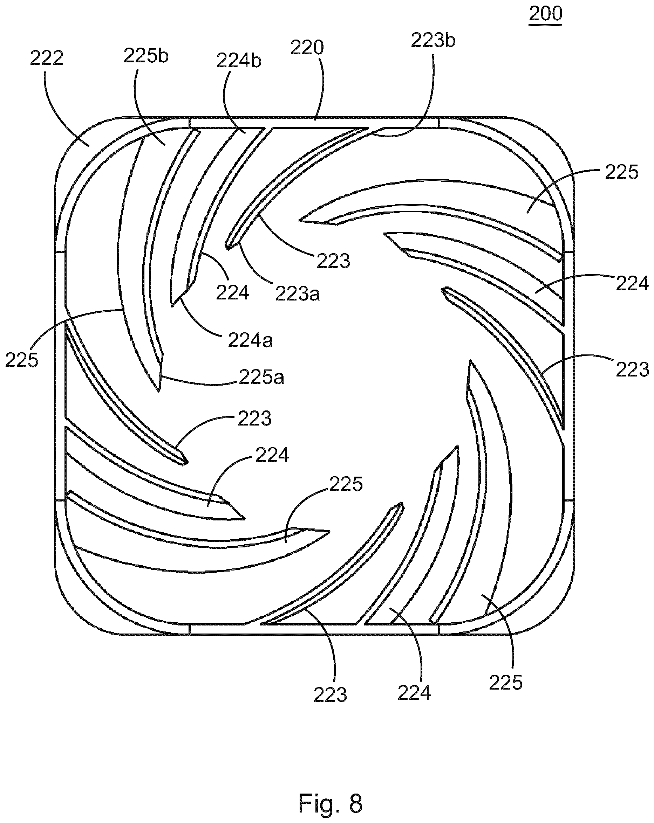

Fig. 8 zeigt eine schematische Darstellung eines Strömungsgleichrichters gemäß der Erfindung. Der Strömungsgenerator 200 weist einen äußeren Abschnitt 222 auf, welcher beispielsweise viereckig mit abgerundeten Ecken ausgestaltet sein kann. Ferner weist der Strömungsgleichrichter 220 mindestens eine Gruppe von ersten, zweiten und dritten Leitschaufeln 223, 224, 225 auf. In Fig. 8 sind vier Gruppen mit den ersten, zweiten und dritten Leitschaufeln 223, 224, 225 gezeigt. Die erste Leitschaufel 223 weist ein erstes und zweites Ende 223a, 223b auf. Die zweite Leitschaufel 224 weist ein erstes und zweites Ende 224a, 224b auf. Die dritte Leitschaufel 225 weist ein erstes und zweites Ende 225a, 225b auf. Die jeweiligen zweiten Enden 223b, 224b, 225b sind an bzw. mit dem äußeren Abschnitt 222 verbunden. Damit ragen die jeweiligen ersten Enden 223a, 224a, 225a nach innen und sind als freie Enden ausgestaltet.

Bezugszeichenliste

| | |
|---|---|
| 100 | Dezentrales Lüftungsgerät |
| 101 | erstes Ende |
| 102 | zweites Ende |
| 103 | Gehäuse |
| 110 | Gitterelement |
| 200 | Einheit |
| 210 | Lüfter |
| 211 | Lüfterschaufeln |
| 212 | Lüftermotorabdeckung |
| 220 | Strömungsgleichrichter |
| 221 | innerer Ring |
| 222 | äußerer Abschnitt |
| 223 | erste Leitschaufel |
| 223a | erstes Ende |
| 223b | zweites Ende |
| 223c | mittlerer Abschnitt |
| 224 | zweite Leitschaufel |
| 224a | erstes Ende |
| 224b | zweites Ende |
| 224c | mittlerer Abschnitt |
| 225 | dritte Leitschaufel |
| 225a | erstes Ende |
| 225b | zweites Ende |
| 225c | mittlerer Abschnitt |
| 226 | Befestigungseinheiten |
| 300 | Wärmespeicherpaket |
| 310 | Wärmespeicherpaket |
| 320 | Wärmespeicherpaket |
| 330 | Wärmespeicherpaket |
| 340 | Wärmespeicherpaket |

**Patentansprüche**

1. Dezentrales Lüftungsgerät (100), mit

mindestens einem Lüfter (210),
mindestens einem Wärmespeicherpaket (300; 310 - 340) und
mindestens einem Strömungsgleichrichter (220) zwischen dem Lüfter (210) und dem mindestens einen Wärmespeicherpaket (300), wobei der Strömungsgleichrichter (220) einen inneren Ring (221) und/oder einen äußeren Abschnitt (222) sowie mindestens eine Gruppe aus mindestens einer ersten und einer zweiten Leitschaufel (223, 224, 225) jeweils an dem inneren Ring (221) und/oder dem äußeren Abschnitt (222) aufweist, wobei die mindestens ersten und zweiten Leitschaufeln (223, 224, 225) bogenförmig an dem inneren Ring (221) und/oder dem äußeren Abschnitt (222) vorgesehen sind.

2. Dezentrales Lüftungsgerät (100) nach Anspruch 1, wobei
die mindestens ersten und zweiten Leitschaufeln (223, 224, 225) jeweils einen unterschiedlichen Anstellwinkel (a) bezogen auf eine durch den inneren Ring (221) aufgespannte Ebene aufweisen.

3. Dezentrales Lüftungsgerät (100) nach Anspruch 1 oder 2, wobei
ein Verhältnis zwischen der Breite des äußeren Abschnitts (222) zum Radius des inneren Ringes (221) 1,2 bis 10 beträgt.

4. Dezentrales Lüftungsgerät (100) nach einem der Ansprüche 1 bis 3, wobei der Anstellwinkel (a) der Leitschaufeln (223, 224, 225) zwischen 40 und 90° beträgt

5. Dezentrales Lüftungsgerät (100) nach einem der Ansprüche 1 bis 4, wobei
der Strömungsgleichrichter (220) einstückig in einem Spritzgussverfahren oder einem Metallgussverfahren hergestellt ist.

6. Dezentrales Lüftungsgerät (100) nach einem der Ansprüche 1 bis 5, wobei
der Strömungsgleichrichter (220) vier Gruppen von ersten, zweiten und dritten Leitschaufeln (223, 224, 225) aufweist.

7. Dezentrales Lüftungsgerät (100) nach einem der Ansprüche 1 bis 6, wobei der äußere Abschnitt eckig ausgestaltet ist.

8. Dezentrales Lüftungsgerät (100), mit

mindestens einem Lüfter (210),
mindestens einem Wärmespeicherpaket (300; 310 - 340) und
mindestens einem Strömungsgleichrichter (220) zwischen dem Lüfter (210) und dem mindestens einen Wärmespeicherpaket (300; 310 - 340),
wobei der Strömungsgleichrichter (220) einen Ring (221) sowie mindestens eine erste und zweite Leitschaufel (223, 224, 225) jeweils an dem Ring (221) aufweist,
wobei die mindestens ersten und zweiten Leitschaufeln (223, 224, 225) bogenförmig an dem Ring vorgesehen sind.

9. Dezentrales Lüftungsgerät (100) nach Anspruch 8, wobei

die mindestens ersten und zweiten Leitschaufeln (223, 224, 225) an einem ihrer Enden mit dem Ring (221) gekoppelt sind, oder
wobei die mindestens ersten und zweiten Leitschaufeln (223, 224, 225) entlang ihrer Länge mit dem Ring (221) gekoppelt sind.

10. Strömungsgleichrichter (220) für ein Lüftungsgerät (100), mit

einem inneren, Ring (221), und/oder
einen äußeren Abschnitt (222) sowie
mindestens einer Gruppe aus mindestens ersten und/oder zweiten Leitschaufeln (223, 224, 225) an dem inneren Ring (221) und/oder dem äußeren Abschnitt (222),
wobei die wenigstens ersten und zweiten Leitschaufeln (223, 224, 225) bogenförmig an dem inneren Ring (221) und/oder dem äußeren Abschnitt (222) vorgesehen sind.

11. Strömungsgleichrichter (220) für ein Lüftungsgerät (100) nach Anspruch 10, wobei ein Material des Strömungsgleichrichters (220) eine Wärmespeicherung ermöglicht.

12. Strömungsgleichrichter (220) für ein Lüftungsgerät (100) nach Anspruch 10 oder 11, wobei der Strömungsgleichrichter (220) einstückig im Spritzgussverfahren oder einstückig im Metallgussverfahren hergestellt ist.

13. Strömungsgleichrichter (220) für ein Lüftungsgerät (100), mit

einem Ring (221) sowie
mindestens ersten und zweiten Leitschaufeln (223, 224, 225), welche mit dem Ring (221) gekoppelt sind.

14. Strömungsgleichrichter (220) nach Anspruch 13, wobei

ein Ende der mindestens ersten und zweiten Leitschaufeln (223, 224, 225) mit dem Ring (221) gekoppelt ist, oder wobei
die mindestens ersten und zweiten Leitschaufeln (223, 224, 225) entlang ihrer Länge an dem Ring (221) gekoppelt sind.

15. Strömungsgleichrichter (220) für ein Lüftungsgerät (100), mit

einem äußeren Abschnitt (222) sowie
mindestens ersten und zweiten Leitschaufeln (223, 224, 225), welche mit dem äußeren Abschnitt (222) gekoppelt sind.

Fig. 1

EP 4 113 024 A1

110    310    200    320    330    340    120    103

220    210    220

100

Fig. 2

Fig. 3A

Fig. 3B

225c

226

220a

220b

225c

Fig. 3C

Fig. 3D

Fig. 3E

Fig. 4A

Fig. 4B

Fig. 5

Fig. 6

Fig. 7A

Fig. 7B

Fig. 8

Europäisches
Patentamt

European
Patent Office

Office européen
des brevets

# EUROPÄISCHER RECHERCHENBERICHT

**Nummer der Anmeldung**

**EP 22 17 1891**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 20 2017 103773 U1 (SCHMITZ OLIVER [DE]) 26. September 2018 (2018-09-26) | 1,3,5,6, 8-15 | INV. F24F7/013 |
| A | * Absatz [0055]; Ansprüche 1-14; Abbildungen 1,2,4,5 * | 2,4,7 | F24F13/06 F24F13/08 |
| | ----- | | |
| X | EP 3 708 841 A1 (VITRONIC DR-ING STEIN BILDVERARBEITUNGSSYSTEME GMBH [DE]) 16. September 2020 (2020-09-16) * Absätze [0014] - [0019], [0029], [0038], [0039]; Abbildungen 3,6 * | 1,4-15 | |
| | ----- | | |
| X | EP 2 322 866 A1 (TROX GMBH GEB [DE]) 18. Mai 2011 (2011-05-18) * Absätze [0006], [0007]; Abbildungen 1-4 * | 10-15 | |
| | ----- | | |

**RECHERCHIERTE SACHGEBIETE (IPC)**

**F24F**

Der vorliegende Recherchenbericht wurde für alle Patentansprüche erstellt

| Recherchenort | Abschlußdatum der Recherche | Prüfer |
|---|---|---|
| München | 7. Oktober 2022 | Degen, Marcello |

KATEGORIE DER GENANNTEN DOKUMENTE

X : von besonderer Bedeutung allein betrachtet
Y : von besonderer Bedeutung in Verbindung mit einer
 anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
 nach dem Anmeldedatum veröffentlicht worden ist
D : in der Anmeldung angeführtes Dokument
L : aus anderen Gründen angeführtes Dokument

.....................................................

& : Mitglied der gleichen Patentfamilie, übereinstimmendes
 Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 17 1891

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-10-2022

| Im Recherchenbericht angeführtes Patentdokument | Datum der Veröffentlichung | Mitglied(er) der Patentfamilie | | Datum der Veröffentlichung |
|---|---|---|---|---|
| DE 202017103773 U1 | 26-09-2018 | KEINE | | |
| EP 3708841 A1 | 16-09-2020 | KEINE | | |
| EP 2322866 A1 | 18-05-2011 | DK | 2322866 T3 | 07-10-2013 |
| | | EP | 2322866 A1 | 18-05-2011 |
| | | ES | 2428385 T3 | 07-11-2013 |
| | | PL | 2322866 T3 | 31-12-2013 |
| | | PT | 2322866 E | 14-10-2013 |

EPO FORM P0461

Für nähere Einzelheiten zu diesem Anhang : siehe Amtsblatt des Europäischen Patentamts, Nr.12/82